# EUROPEAN PATENT SPECIFICATION

(11) **EP 3 967 672 B1**
(45) Date of publication and mention of the grant of the patent: **18.03.2026**
(21) Application number: 21195843.4
(22) Date of filing: 09.09.2021
(51) Int. Cl.: C04B 33/13, C04B 33/132

(54) **METHOD FOR PRODUCING CERAMIC TILES, CERAMIC TILES AND WALL**
VERFAHREN ZUR HERSTELLUNG VON KERAMIKFLIESEN, KERAMIKFLIESEN UND WAND
PROCEDE DE PRODUCTION DE CARREAUX DE CERAMIQUE, CARREAUX DE CERAMIQUE ET MUR

(30) Priority: 10.09.2020 NL 2026440
(43) Date of publication of application: 16.03.2022
(73) Proprietor: KONINKLIJKE MOSA B.V., 6224 AL Maastricht (NL)
(72) Inventor: STULTIENS, Mikel Mathias Antoinette Joseph, MAASTRICHT (NL); VERHEIJDEN, Marcel Henricus Mechtilda, MAASTRICHT (NL); VAN DER WEELE, Dorine Helena, MAASTRICHT (NL)
(74) Representative: Algemeen Octrooi- en Merkenbureau B.V.

(56) References cited:
- EP-A2- 1 498 399
- WO-A1-2018/188711
- ESCARDINO A ET AL: "Kinetic study of calcite particle (powder) thermal decomposition: Part I", JOURNAL OF THE EUROPEAN CERAMIC SOCIETY, ELSEVIER, AMSTERDAM, NL, vol. 28, no. 16, 1 December 2008 (2008-12-01), pages 3011 - 3020, XP025432446, ISSN: 0955-2219, [retrieved on 20080630], DOI: 10.1016/J.JEURCERAMSOC.2008.05.017
- ANONNMOUS: "Inspiration booklet, reusing water sector residuals", AQUAMINERALS.COM/, 1 January 2019 (2019-01-01), XP055848075, Retrieved from the Internet <URL:https://aquaminerals.com/wp-content/uploads/2019/07/Inspiration-booklet-AquaMinerals-versie-mei-2019.pdf> [retrieved on 20211006]
- TANG CAMILLA ET AL: "Softening of drinking water by the pellet reactor - Effects of influent water composition on calcium carbonate pellet characteristics", SCIENCE OF THE TOTAL ENVIRONMENT, ELSEVIER, AMSTERDAM, NL, vol. 652, 12 October 2018 (2018-10-12), pages 538 - 548, XP085563323, ISSN: 0048-9697, DOI: 10.1016/J.SCITOTENV.2018.10.157
- "ACTINA ™ Reducing water hardness with pellet softening", 1 December 2013 (2013-12-01), Saint-Maurice Cedex, pages 1 - 4, XP055227791, Retrieved from the Internet <URL:https://www.veoliawatertech.com/sites/g/files/dvc3601/files/document/2019/01/ACTINA%E2%84%A2%20Brochure.pdf> [retrieved on 20151111]

## Description

The present invention relates to the use of lime for producing ceramic tiles. In particular, the present invention relates to the use of a particular lime source in a process for producing ceramic tiles. In addition, the present invention also relates to a ceramic tile which has been produced in this way and the use of such a ceramic tile on a wall.

Tiles are in large-scale use in the building industry, for finishing floors and walls. As a rule, a tile is a flat panel which, for example, may have been baked from clay or may be made of glass, concrete or natural stone. In order to improve the performance and/or for aesthetic reasons, tiles are often provided with a glazed front side. Fastening a tile usually takes place in a conventional manner by placing the tile, usually in a relatively large pattern with other tiles, in a bed of mortar, cement, adhesive or the like.

European application EP 0 300 532 in the name of the present applicant discloses a ceramic, non-glazed floor tile which consists of a relatively thick base layer and a relatively thin upper layer. The type of material for the base layer and the top layer is the same and consists of a clay-containing material, mainly composed of clay and kaolin, a liquefier and sand or quartz powder. The material from which the base layer is made, consists of approximately 50% clay and kaolin, 28% liquefiers (brighteners such as felspar) having a maximum grain size of 63 µm and approximately 22% sand (quartz) having a maximum grain size of 63 µm. The material from which the upper layer is made also consist of approximately 50% clay and kaolin, but contains more liquefier than the material for the base layer, namely 30% liquefier with a mean grain size of 7 µm and the remainder, i.e. 20%, consists of quartz powder.

It is known from German Laid-Open Specification DE 24 50 944 to recover a valuable raw material for the production of ceramic masses from the natural mineral mixture obtained as a waste product during the manufacturing steps already known in the lime industry and using the sludge ponds as sedimentation basins. The slurry from washing limestone is obtained by the mixture of natural minerals extracted from naturally occurring limestone, which contains quartz and clay types as accompanying minerals, by first breaking and optionally screening the limestone in a manner known per se, following which a mineral mixture, consisting of clay, quartz and calcite, is washed and sand is separated off from the slurry obtained in the process by means of hydrocyclones, after which the remaining, coarse-grained constituents, i.e. larger than approximately 100 micrometres, are separated off and the remaining slurry is dewatered to in sedimentation basins.

Chinese publication CN106699146A relates to a semi-polished ceramic glazed tile having a fluorescent effect. The raw materials used in this case are quartz, felspar, hard clay, plastic clay and limestone.

American publication US 2018/0230646 relates to a method for producing a carpet or carpet tile with recycled content, consisting of the steps of extracting CaC0₃ from waste water by extracting CaC0₃ from the waste water during a softening process by adding a grain to the water, grafting the CaC0₃ to the grain and adding the CaC0₃ to the (liquid) backing material for a carpet tile. One possible distribution is a distribution which consists of a D10 = 0-50 µm, D50 = 250-300 µm, D90 = 500-550 µm.
WO2018188711 relates to a method for production of precipitated calcium carbonate (PCC), the method comprising the steps of providing an aqueous solution of calcium, carbon dioxide, bicarbonate, and carbonate, providing at least one reactor and introducing the solution in the reactor and withdrawing the solution from the reactor wherein a compressed gas is injected into the aqueous solution to effect the precipitation of a surface coating consisting substantially of calcium carbonate.
A booklet issued by Aquaminerals discloses the application of ground sand-free calcite particles in carpet backings and ceramic products.

In many of the tiles which are currently in use, lime is used which originates from natural lime sources, such as marl quarries. In the Netherlands, limestone (in the form of marl) was mined in the ENCI quarry south of Maastricht until 2018. Fundamentally, virtually all lime fertilizers consist of calcium carbonate or a combination of calcium carbonate and magnesium carbonate. Marl consists of soft calcium carbonate, limestone consists of a slightly harder one and dolomite consists of a combination of calcium carbonate and magnesium carbonate. In Belgium, Sibelco is mining marl near the Roosburg mine in Zichen-Zussen-Bolder in opencast mining and expects to mine 200,000 tons of marl per year.

When preparing drinking water, there are several legal requirements which must be met. One of these requirements relates to the hardness of the water. The Drinking Water Decree stipulates that water companies are not allowed to soften drinking water to below 5.6° dH. This Drinking Water Decree has been compiled by the authorities and follows the guidelines of the World Health Organization. As a result of this Drinking Water Decree, not all the lime can be removed from the water. The reason for this is that a small amount of lime in the water protects the pipes in homes and the water mains. In addition, calcium and magnesium are deemed to be good minerals which contribute to human health.

Approximately half of the Dutch drinking water is softened in up-flow grain reactors. The water is softened for reasons of public health (lowering of metal-dissolving capability), costs to society (reduction in maintenance costs of hot-water appliances and energy costs), environmental load (reduction in energy consumption and release of metal) and comfort (reduction in lime deposit, increase in customer satisfaction).

In practice, for example dune water is softened from approximately 13° dH to 8.5° dH. The water is pumped through a reactor from below to the top. Grains of sand are present in the reactor which are suspended in the water. By adding a base, the solubility of lime in water is reduced. The surplus of lime adheres to the grains of sand; the grains grow and become heavier, upon which they sink down. When the water at the top leaves the reactor, it contains much less dissolved lime and it is softened. The lime which has been removed from the water is sold, for example, to the glass industry and to feed-producing companies, following which the feed-producing companies process the lime in, for example, chicken feed, because chickens need lime in order for them to produce strong eggshells.

It is an object of the present invention to re-use lime which originates from the processes for preparing drinking water in a useful way.

It is another object of the present invention to replace the lime to be used in the production of ceramic tiles, originating from marl and lime quarries, by another sustainable source of lime.

It is another object of the present invention to use the lime to be used in the production of ceramic tiles and originating from a sustainable source with such a particle size that a ceramic tile is obtained which fulfils the desired flatness and dimensional accuracy, in particular the European production standard drawn up for ceramic tiles, namely EN14411.

As mentioned in the introduction, the invention thus relates to the use of lime for producing ceramic tiles, characterized by the fact that the aforementioned lime originates from a process for preparing drinking water.

By means of such a source of lime, the abovementioned objects are met. The present inventors have found that lime, which is recovered during processes for preparing drinking water, can readily be used as a constituent in the process for producing ceramic tiles. Using such a source of lime thus makes it possible to abandon the use of the original lime source, namely the lime mined in quarries. With the abovementioned process for preparing drinking water, in particular the softening, caustic soda or milk of lime and a grafting material are added to the water at the bottom of a reactor and calcium carbonate (lime) crystallizes on the grafting material. This produces a round, solid grain (pellet) which largely consists of lime (calcite). Thus, when using calcite as grafting material, a grain of lime is produced which consists for almost 100% of calcite and the present inventors have found that such a grain of lime is readily suitable to be used as a lime source with the method for producing ceramic tiles. The lime to be used in the present invention originates from softening installations such as those used in a process for preparing drinking water.

The term tile used in the present invention only relates to ceramic tiles which have been produced by means of a heating process. The term tile should not be confused with tiles made of natural and synthetic textile materials, such as wool and cotton, plastics, for example olefins, such as polypropene, and styrene polymers, latex and rubbers, which tiles comprise a backing and a top layer and which are produced by means of, for example, a tufting process in order to then be used as floor covering.

The lime has a specific particle size, namely a D50 of 3-6 microns and a D90 = 15-17 microns, both of which parameters are measured in particular by means of a Micromeritics Sedigraph. Preferable values for D50 are preferably 4-6 microns and more preferably 3-4 microns. A value of 3-4 microns has led to surprising results regarding the desired flatness and dimensional accuracy, in particular the European production standard which has been drawn up for ceramic tiles, namely EN14411.

The measuring method used in the process is based on two physical phenomena: sedimentation and photon absorption. Stokes' law is used to determine the particle size by measuring the terminal settling velocities of sample particles of different sizes. Stokes' law simply states that the final velocity of a spherical particle in a liquid medium is proportional to the square of the diameter of the particle. If a collection of particles of different diameter is evenly dispersed in a liquid at a density which is lower than that of the particles and is subsequently allowed to settle on account of the force of gravity, then it is possible to accurately predict when all the particles below a certain size have dropped under a certain level. This information makes it possible to deduce the particle size distribution (see ISO 13317-3: 2001). The relative mass concentration for every size category is determined by applying the Beer-Lambert-Bouguer law to the measured absorption of a low-power x-ray beam which is projected through the fraction of the sample which remains in suspension. Persons skilled in the art also have other measurement methods for determining the size distribution at their disposal, in particular the values for D50 and D90. An apparatus which is suitable for measuring D50 and D90 is SediGraph III Plus 5125, which is a unique, reliable and proven particle size analyser based on scientific laws and is marketed by Micromeritics (USA).

The particle size distribution aimed at by the present invention is achieved, for example, by performing certain screening operations which are known to a person skilled in the art. The present inventors have found that the abovementioned particle size distribution is important regarding the reactivity during the material transformation process, namely sintering, and the formation of anorthite, namely a calcium-aluminium-tectosilicate.

The present inventors have found that the use of lime comprising excessively fine particles as well as the use of lime comprising excessively coarse particles may result in problems regarding the dimensional properties of the eventual ceramic tile. This should be understood to mean the flatness of the ceramic tile, across the diagonal of the ceramic tile as well as across the long and short sides. Therefore, such a ceramic tile does not meet the European production standard which has been drawn up for ceramic tiles, namely EN14411.

The present inventors have also found that it takes a long time to grind calcite in the production mills until the desired abovementioned particle size distribution is reached. It is assumed that this long grinding time is due to the hardness of the calcite grain and the required fineness for processing. It has been observed that, due to the fineness, the calcite slurry behaves differently, the slurry has a higher viscosity and the grinding intensity decreases. This leads to even longer grinding times during the production process. In order to keep the grinding intensity stable over time, certain additives may be added to the grinding medium, as a result of which the grinding intensity remains stable due to the fact that the viscosity does not increase with increasing fineness.

The present inventors have also found that the use of lime comprising excessively coarse particles leads to problems regarding reactivity. It is assumed that the surface of the ceramic tile comprises free CaO which is converted to Ca hydrate after glazing, resulting in defects in the surface. Consequently, such a ceramic tile does not satisfy the European production standard drawn up for ceramic tiles, namely EN14411.

The amount of lime in the ceramic tile is in the range of 5-20 % by weight, preferably 8-15 % by weight, in particular preferably 10-12 % by weight, based on the weight of the ceramic tile. The other constituents of the ceramic tile are: 45-50 % by weight of clay materials, 10-15 % by weight of felspar, 10-15 % by weight of sand (quartz) and 8-10 % by weight of waste constituents (mainly fragments of broken ceramic tiles), wherein the sum amount of the constituents has to be 100%. It should be noted here that, in practice, the values of the other constituents may, as mentioned before, deviate slightly from said values. If the amount of lime to be used is excessively small, then it is not possible to maintain the desired porosity of the final ceramic tile. If, however, the amount of lime to be used is excessively high, then this will result in an undesirably high porosity of the final ceramic tile.

The present invention relates to the use of lime originating from a process for preparing drinking water in a ceramic tile for the building industry, as a wall tile.

The present invention furthermore relates to a ceramic tile in which one of the constituents is lime, as defined in claim 5, characterized by the fact that the abovementioned lime originates from a process for preparing drinking water.

In the ceramic tile, the abovementioned lime has a specific particle size to which the following applies: D50 = 3-6 microns and D90 = 15-17 microns, preferably D50 = 4-6 microns and in particular preferably D50 = 3-4 microns, in particular measured by means of a Micromeritics Sedigraph.

The amount of lime in the abovementioned ceramic tile is in the range of 5-20 % by weight, preferably 8-15 % by weight, in particular preferably 10-12 % by weight, based on the weight of the ceramic tile. The other constituents of the ceramic tile are: 45-50 % by weight of clay materials, 10-15 % by weight of felspar, 10-15 % by weight of sand (quartz) and 8-10 % by weight of waste constituents (mainly fragments of broken ceramic tiles), wherein the sum amount of constituents has to be 100%.

The present invention also relates to a wall composed of one or more ceramic tiles according to the present invention, as explained above.

The present invention will be explained in more detail below by means of one or more examples, in which case it should be noted that the abovementioned examples serve to explain the present invention.

### Example 1

A paste for use as material for producing a ceramic tile had the following composition: lime: 12 % by weight, 50 % by weight of clay, 15 % by weight of felspar, 15 % by weight of sand and 8 % by weight of rejected scrap. The particle size distribution of the lime used was: D50 = 5 micrometres and D90 = 16 micrometres, which values were obtained using the SediGraph III Plus 5125, Micrometrics (USA). The lime used was lime originating from Waterleiding Maatschappij Limburg (WML) which mainly uses groundwater to prepare drinking water, a part of which originates from surface water, namely water from the river Maas. In order to make the drinking water less hard, softening installations are used, from which softening installations the lime in question was acquired.

The paste was subsequently processed in accordance with a conventional process, such as known, for example, from EP0300532, to produce a ceramic tile which satisfied the European production standard which has been drawn up for ceramic tiles, namely EN14411.

### Example 2

The same amounts of the constituents as in Example 1 were used, except for the particle size distribution of the lime used, namely: D50 = 4 micrometres and D90 = 15 micrometres, which values were obtained using the SediGraph III Plus 5125, Micrometrics (USA). The lime used was lime originating from Waterleiding Maatschappij Limburg (WML), as described in more detail in Example 1.

The paste was subsequently processed in accordance with a conventional process, such as known, for example, from EP0300532, to produce a ceramic tile which satisfied the European production standard which has been drawn up for ceramic tiles, namely EN14411.

### Example 3

The same amounts of the constituents as in Example 1 were used, except for the particle size distribution of the lime used, namely: D50 = 3 micrometres and D90 = 15 micrometres, which values were obtained using the SediGraph III Plus 5125, Micrometrics (USA). The lime used was lime originating from Waterleiding Maatschappij Limburg (WML), as described in more detail in Example 1.

The paste was subsequently processed in accordance with a conventional process, such as known, for example, from EP0300532, to produce a ceramic tile which satisfied the European production standard which has been drawn up for ceramic tiles, namely EN14411.

### Comparison Example 1

The same amounts of the constituents as in Example 1 were used, except for the particle size distribution of the lime used, namely: D50 = 8 micrometres and D90 = 20 micrometres, which values were obtained using the SediGraph III Plus 5125, Micrometrics (USA). The lime used was lime originating from Waterleiding Maatschappij Limburg (WML), as described in more detail in Example 1.

The paste was subsequently processed in accordance with a conventional process, such as known, for example, from EP0300532, to produce a ceramic tile which did not satisfy the European production standard which has been drawn up for ceramic tiles, namely EN14411, in particular due to the undesirable presence of surface defects on the ceramic tile.

### Comparison Example 2

The same amounts of the constituents as in Comparison Example 1 were used, except for the particle size distribution of the lime used, namely: D50 = 1 micrometres and D90 = 13 micrometres, which values were obtained using the SediGraph III Plus 5125, Micrometrics (USA). The lime used was lime originating from Waterleiding Maatschappij Limburg (WML), as described in more detail in Example 1.

The paste was subsequently processed in accordance with a conventional process, such as known, for example, from EP0300532, to produce a ceramic tile which did not satisfy the European production standard which has been drawn up for ceramic tiles, namely EN14411, in particular with regard to the flatness of the ceramic tile.

## Claims

1. The use of lime originating from calcite pellets as grafting material in a softening process for preparing drinking water in a ceramic tile for the building industry, wherein said lime has a particle size to which the following applies: D50 = 3-6 microns and D90 = 15-17 microns, measured by means of a Micromeritics Sedigraph.

2. The use according to Claim 1, **characterized in that** said lime has a particle size to which the following applies: D50 = 4-6 microns, preferably D50 = 3-4 microns, measured by means of a Micromeritics Sedigraph.

3. The use according to one or more of Claims 1-2, **characterized in that** the amount of lime in said ceramic tile is in the range of 5-20 % by weight, preferably 8-15 % by weight, in particular preferably 10-12 % by weight, based on the weight of the ceramic tile.

4. The use according to one or more of Claims 1-3 in a wall tile.

5. Ceramic tile comprising lime originating from calcite pellets as grafting material in a softening process for preparing drinking water, wherein said lime has a particle size to which the following applies: D50 = 3-6 microns and D90 = 15-17 microns, measured by means of a Micromeritics Sedigraph, wherein the amount of lime in the ceramic tile is in the range of 5-20 % by weight, based on the weight of the ceramic tile, and the other constituents are 45-50 % by weight of clay materials, 10-15 % by weight of felspar, 10-15 % by weight of sand and 8-10 % by weight of waste constituents, wherein the sum amount of constituents has to be 100%.

6. Wall composed of one or more ceramic tiles according to Claim 5.

## Patentansprüche

1. Verwendung von Kalk, der aus Calcitpellets als Aufbaumaterial bei einem Enthärtungsverfahren zur Herstellung von Trinkwasser stammt, in einer Keramikfliese für die Bauindustrie, wobei der Kalk eine Partikelgröße aufweist, für die Folgendes gilt: D50 = 3-6 Mikrometer und D90 = 15-17 Mikrometer, gemessen durch einen Mikromeritics Sedigraph.

2. Verwendung nach Anspruch 1, **dadurch gekennzeichnet, dass** der Kalk eine Partikelgröße aufweist, für die Folgendes gilt: D50 = 4-6 Mikrometer, vorzugsweise D50 = 3-4 Mikrometer, gemessen durch einen Mikromeritics Sedigraph.

3. Verwendung nach einem oder mehreren der Ansprüche 1-2, **dadurch gekennzeichnet, dass** die Menge an Kalk in der Keramikfliese in dem Bereich von 5-20 Gew.-%, vorzugsweise 8-15 Gew.-%, besonders bevorzugt 10-12 Gew.-%, bezogen auf das Gewicht der Keramikfliese, liegt.

4. Verwendung nach einem oder mehreren der Ansprüche 1-3 in einer Wandfliese.

5. Keramikfliese umfassend Kalk, der aus Calcitpellets als Aufbaumaterial bei einem Enthärtungsverfahren zur Herstellung von Trinkwasser stammt, wobei der Kalk eine Partikelgröße aufweist, für die Folgendes gilt: D50 = 3-6 Mikrometer und D90 = 15-17 Mikrometer, gemessen durch einen Micromeritics Sedigraph, wobei die Menge an Kalk in der Keramikfliese in dem Bereich von 5-20 Gew.-%, bezogen auf das Gewicht der Keramikfliese, liegt, die übrigen Bestandteile 45-50 Gew.-% Tonwerkstoffe, 10-15 Gew.-% Felspat, 10-15 Gew.-% Sand und 8-10 Gew.-% Abfallbestandteile sind, wobei die Gesamtmenge der Bestandteile 100 % betragen muss.

6. Wand, bestehend aus einer oder mehreren Keramikfliesen nach Anspruch 5.

## Revendications

1. Utilisation de chaux provenant de granules de calcite comme matériau de greffage dans un processus d'adoucissement pour la préparation d'eau potable dans un carreau de céramique pour l'industrie du bâtiment, où ladite chaux a une taille de particules à laquelle s'applique ce qui suit : D50 = 3-6 microns et D90 = 15-17 microns, mesurées au moyen d'un appareil Micromeritics Sedigraph.

2. Utilisation selon la revendication 1, **caractérisée en ce que** ladite chaux a une taille de particules à laquelle s'applique ce qui suit : D50 = 4-6 microns, de préférence D50 = 3-4 microns, mesurée au moyen d'un appareil Micromeritics Sedigraph.

3. Utilisation selon une ou plusieurs des revendications 1 et 2, **caractérisée en ce que** la quantité de chaux dans ledit carreau de céramique se trouve dans la plage allant de 5 à 20% en poids, de préférence de 8 à 15% en poids, en particulier de préférence de 10 à 12% en poids, par rapport au poids du carreau de céramique.

4. Utilisation selon une ou plusieurs des revendications 1 à 3 dans un carreau de mur.

5. Carreau de céramique comprenant de la chaux provenant de granules de calcite comme matériau de greffage dans un processus d'adoucissement pour la préparation d'eau potable, où ladite chaux a une taille de particules à laquelle s'applique ce qui suit : D50 = 3-6 microns et D90 = 15-17 microns, mesurées au moyen d'un appareil Micromeritics Sedigraph, où la quantité de chaux dans le carreau de céramique se trouve dans la plage allant de 5 à 20% en poids, par rapport au poids du carreau de céramique, et les autres constituants sont 45 à 50% en poids de matériaux argileux, 10 à 15% en poids de feldspath, 10 à 15% en poids de sable et 8 à 10% en poids de constituants de déchets, où la somme de quantités de constituants doit être égale à 100%.

6. Mur composé d'un ou de plusieurs carreaux de céramique selon la revendication 5.
